# EUROPEAN PATENT SPECIFICATION

(11) **EP 1 022 724 B1**
(45) Date of publication and mention of the grant of the patent: **23.07.2008**
(21) Application number: 99100952.3
(22) Date of filing: 20.01.1999
(51) Int. Cl.: G10L 15/06

(54) **Speaker adaptation for confusable words**
Sprecheradaption für verwechselbare Wörter
Adaptation au locuteur pour des mots portant à confusion

(43) Date of publication of application: 26.07.2000
(73) Proprietor: Sony Deutschland GmbH, 10785 Berlin (DE)
(72) Inventor: Gorozny, Silke c/o SONY Deutschland GmbH, 70736 Fellbach (DE); Kompe, Ralf c/o SONY Deutschland GmbH, 70736 Fellbach (DE); Buchner, Peter c/o SONY Deutschland GmbH, 70736 Fellbach (DE)
(74) Representative: Müller - Hoffmann & Partner

(56) References cited:
- EP-A- 0 700 031
- EP-A- 0 836 144
- WO-A-95/28790
- ANONYMOUS: "Corrective Training of Feneme-Based Markov Models for Discrimination between Highly Confusable Words" IBM TECHNICAL DISCLOSURE BULLETIN, vol. 36, no. 4, April 1993 (1993-04), pages 533-536, XP000364607 New York, US

## Description

This invention is related to a method to perform an adaptation of an automatic speech recognition system, in particular to a method to prevent an adaptation of the wrong models in a speech recognition system.

State of the art speech recognizers consist of a set of statistical distribustions modeling the acoustic properties of certain speech segments. These acoustic properties are encoded in feature vectors. As an example, one Gaussian distribution can be taken for each phoneme. These distributions are attached to states. A (stochastic) state transition network (usually hidden Markov models) defines the probabilities for sequences of states and sequences of feature vectors. Passing a state consumes one feature vector covering a frame of e.g. 10 ms of the speech signal.

The stochastic parameters of such a recognizer are trained using a large amount of speech data either from a single speaker yielding a speaker dependent (SD) system or from many speakers yielding a speaker independent (SI) system.

Speaker adaptation (SA) is a widely used method to increase recognition rates of SI systems. State of the art speaker dependent systems yield much higher recognition rates than speaker independent systems. However, for many applications, it is not feasible to gather enough data from a single speaker to train the system. In case of a consumer device this might even not be wanted. To overcome this mismatch in recognition rates, speaker adaptation algorithms are widely used in order to achieve recognition rates that come close to speaker dependent systems, but only use a fraction of speaker dependent data compared to speaker dependent ones. These systems initially take speaker independent models that are then adapted so as to better match the speaker's acoustics.

Usually, the speaker adaptation is performed in supervised mode. That is the spoken words are known and the recognizer is forced to recognize them. Herewith a time alignment of the segment-specific distributions is achieved. The mismatch between the actual feature vectors and the parameters of the corresponding distribution builds the basis for the adaptation. The supervised adaptation requires an adaptation session to be done with every new speaker before he/she can actually use the recognizer.

Usually, the speaker adaptation techniques modify the parameters of the hidden Markov models so that they better match the new speakers acoustics. Normally, in batch or off-line adaptation a speaker has to read a pre-defined text before he/she can use the system for recognition, which is then processed to do the adaptation. Once this is finished the system can be used for recognition. This mode is also called supervised adaptation, since the text was known to the system and a forced alignment of the corresponding speech signal to the models corresponding to the text is performed and used for adaptation.

However, an unsupervised or on-line method is better suited for most kinds of consumer devices. In this case, adaptation takes place while the system is in use. The recognized utterance is used for adaptation and the modified models are used for recognizing the next utterance and so on. In this case the spoken text is not known to the system, but the word(s) that were recognized are taken instead.

An adapatation of the speaker adapted model set can be repreatedly performed to further improve the performance of specific speakers. There are several existing methods for speaker adaptation, e.g. maximum a posteriori adaptation (MAP) or maximum likelihood linear regression (MLLR) adaptation.

For speech recognition systems often the problem arises that the vocabulary comprises many words that sound similar. As a consequence it is often difficult to distinguish between these words and this often causes misrecognitions. If a system uses unsupervised speaker adaptation to improve its models for particular speakers, these misrecognitions may lead adaptation to the wrong direction and this may have an adverse effect on the recognition rates, since then the wrong models are modified.

State-of-the-art speech recognition systems try to resolve ambiguities using grammars and language models that define a structure of valid sentences, so that in some cases ambiguities can be resolved by this.

Another method disclosed in EP 0 763 812 A1 is the use of verification methods to reduce the confusability of certain words. It is a mathematical approach in which confidence measures are used for verification of n-best recognized words strings. The result of this verification procedure (the derivative of the loss function) is used as an optimization criterion for HMM training prior to the use of the system. In this case, all utterances are used for training and the method is used to maximize the difference in the likelihood of confusable words.

In WO-A1-95/28790 sucessfully recognized speech signals are used to adapt speech recognition models. In EP-A1-070031 confusable words in a speech recognition vocabulary are avoided at the training stage.

However, in supervised or especially in unsupervised speech recognition systems misrecognitions can occur so that then the wrong HMMs will be adapted. If this happens repeatedly, recognition performance may decrease drastically.

Therefore, it is the object underlying the present invention to propose a method for adaptation that overcomes the problems described above.

The inventive method is defined in independent claim 1. Preferred embodiments thereof are defined in the respective following dependent claims.

This problem is solved by avoiding adaptation based on a misrecognized word if this is confusable, e.g. highly confusable with other words.

According to the inventive method the speech recognition system is made aware of such highly confusable words and if such a word is recognized, double checks the recognition result by asking for confirmation from the user. Only when the system can be sure that such a word was recognized correctly, it will be used for adaptation.

Therefore, prior to the recognition phase, it is determined which words in the vocabulary are highly confusable with other words. This is e.g. done by comparing and computing the number of differing phonemes in relation to the total number of the words. Another possibility might be to use sets of template speech signals representing all words in the vocabulary and then computing a distance between these words. Such templates can preferably be Hidden Markov Models. Of course the determination of the confusability is not limited to this.

Also, a grade of confusabiltity of a certain word contained in the vocabulary to the other words of the vocabulary can be determined. This can be done manually or automatically using well known similarity measures for phoneme strings and/or HMMs. In this case not only highly confusable words, but also words that are confusable at all have to get a confirmation or may also or instead be processed with other verification technologies.

In any case, for each word in the vocabulary it is known if and with which word(s) it is confusable and the grade of this respective confusability. If during recognition one of the words that was previously marked as being confusable is recognized, e.g. as highly confusable, the user is asked to confirm the recognition result and in case it was misrecognized, to repeat or spell it (if the user interface comprises a keyboard he/she could also type it; other input modalities are also suitable for correction purposes). After that is done the system can use the speech signal of the previously misrecognized words for which it now knows the correct word for adaptation. If the word was not a confusable one, no confirmation from the user is needed but other methods to verify the reliability of the recognition results may be applied.

As a result of the inventive method the confusability of generally confusable words will decline, because always the right models are adapted and thus the discrimination for highly confusable words should become easier.

The inventive method to perform an adaptation of an automatic speech recognition system will be better understood from the following detailed description of an exemplary embodiment thereof taken in conjunction with the appendent drawings wherein:
- **Figure 1**: shows the process of determination of confusability between words in the vocabulary according to the present invention; and
- **Figure 2**: shows the procedure to perform an adaptation according to the present invention.

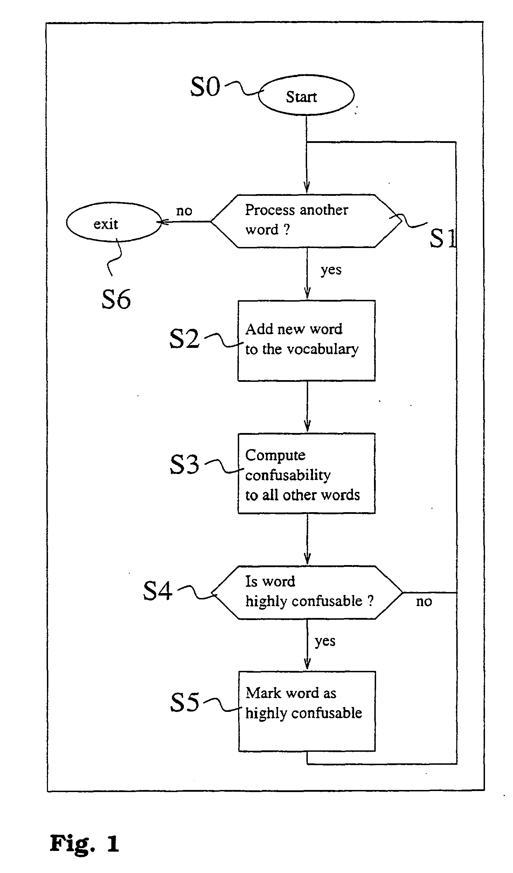

Figure 1 shows the determination of confusability between words in the vocabulary prior to the recognition phase. According to the exemplary embodiment, it is determined here which words in the vocabulary are highly confusable with other words.

After the start of the procedure in a step S0, it is confirmed in a step S1 whether to process another word or not. In case no additional word should be processed the procedure will be set forth with step S6 to be ended. In the other case the procedure will be set forth with step S2 in which a new word is added to the vocabulary. Thereafter, the confusability of this new word to all other words already contained in the vocabulary is computed in a step S3.

As mentioned above, there are several methods to compute the confusability and also several results, i.e. several grades of confusability.

In a step S4 it is determined if this new word is highly confusable to other words. However, the determination whether this word is highly confusable with other words is no limitation of the present invention. It could also be checked in this step S4 if the word is confusable with other words at all and the grade of confusability will be passed on to the next step. In this exemplary embodiment, however, a classification of the grade of confusability is already performed in step S4.

If the new word is highly confusable with other words, this word is marked as highly confusable in a step S5. Thereafter, the procedure is set forth again with step Sl in which it is checked if another word should be processed. If the word is not regarded as to be highly confusable with other words in step S4, the procedure is directly set forth with step S1.

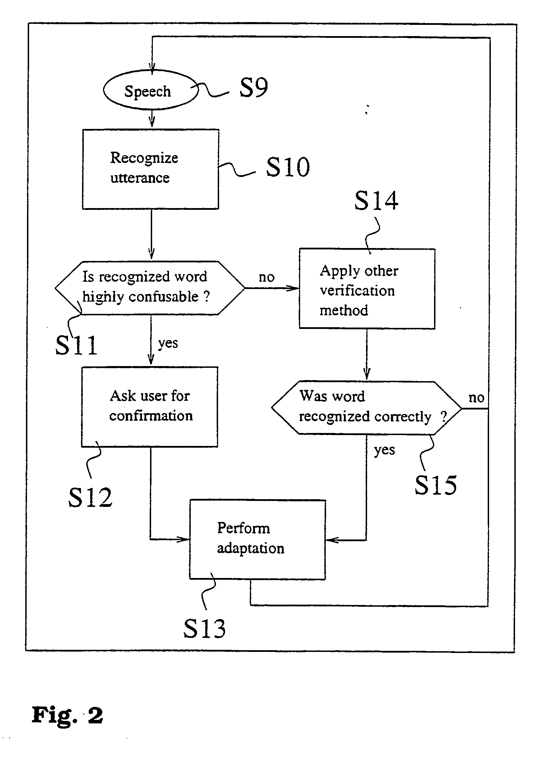

Figure 2 shows the endless loop in which an adaptation according to the present invention is performed during the recognition process.

After an utterance of a user was spoken to the system in a step S9, a recognition of this utterance is performed in a step S10. In a step S11 it is checked whether one of the recognized words is highly confusable with other words (that are possible in this context) or not.

If the recognized word is regarded as to be highly confusable with at least one other word of the vocabulary in step S11, the user is asked for confirmation of the word in step S12. After the user's confirmation an adaptation of the models is performed in step S13 and the next spoken utterance is received in step S9.

If the recognized word is not regarded as to be highly confusable with any other words in step S11 any other verification method can be applied to the word in step S14. Thereafter, it is checked whether the word was recognized correctly or not in step S15. If the word was recognized correctly in step S15, an adaptation is performed in step S13, whereafter the next spoken utterance is received in step S9. If the word was not recognized correctly the next spoken utterance is directly received in step S9 without performing the adaptation in step S13.

## Claims

1. Method to perform an adaptation of an automatic speech recognition system, **characterized by** the following steps:
marking the words in the vocabulary of the speech recognition system that are confusable with other words prior to the recognition process;
requesting a confirmation during the recognition process when a word marked as confusable is recognized; and
perform an adaptation of the automatic speech recognition system with recognized words marked as confusable for which a positive confirmation was given.

2. Method according to claim 1, **characterized by** the following step:
verify recognized words not marked as confusable; and
perform an adaptation of the automatic speech recognition system with verified words.

3. Method according to claim 1 or 2. **characterized by** the following step:
perform an adaptation of the automatic speech recognition system with recognized words not marked as confusable.

4. Method according to anyone of claims 1 to 3, **characterized in that** a word in the vocabulary of the speech recognition system is marked as confusable on the basis of a comparison and computation of the number of differing phonemes in relation to the total number of phonemes of the word.

5. Method according to anyone of claims 1 to 4, **characterized in that** a word in the vocabulary of the speech recognition system is marked as confusable on the basis of a computation of a distance measure between all words in the vocabulary with the help of a set of template speech signals representing all words in the vocabulary.

6. Method according to claim 5, **characterized in that** said set of template speech signals are Hidden Markov Models.

7. Method according to anyone of claims 1 to 6, **characterized in that** in case of a negative confirmation the user is asked to repeat the misrecognized word.

8. Method according to anyone of claims 1 to 7, **characterized in that** in case of a negative confirmation the user is asked to spell the misrecognized word.

9. Method according to claim 7 or 8, **characterized in that** the previously misrecognized word is used for adaptation after its correct recognition on basis of the repetition and/or spelling.

10. Method according to anyone of claims 1 to 9, **characterized in that** in case of a negative confirmation the user is asked to type in the misrecognized word.

11. Method according to anyone of claims 1 to 10, **characterized in that** the adaptation of the speech recognition system is an adaptation of the speaker independent Hidden Markov Models to speaker adapted Hidden Markov Models.

12. Method according to claim 11, **characterized in that** the adaptation method is maximum aposteriori adaptation or a maximum likelihood linear regression adaptation.

## Patentansprüche

1. Verfahren zum Ausführen einer Anpassung eines automatischen Spracherkennungssystems, **gekennzeichnet durch** die folgenden Schritte:
Markieren der Wörter in dem Vokabular des Spracherkennungssystems, die mit anderen Wörtern verwechselbar sind, vor dem Erkennungsprozess;
Anfordern einer Bestätigung während des Erkennungsprozesses, wenn ein als verwechselbar markiertes Wort erkannt wird; und
Ausführen einer Anpassung des automatischen Spracherkennungssystems mit erkannten Wörtern, die als verwechselbar markiert sind und für die eine positive Bestätigung gegeben worden ist.

2. Verfahren nach Anspruch 1, **gekennzeichnet durch** den folgenden Schritt:
Verifizieren erkannter Wörter, die nicht als verwechselbar markiert sind; und
Ausführen einer Anpassung des automatischen Spracherkennungssystems mit verifizierten Wörtern.

3. Verfahren nach Anspruch 1 oder 2, **gekennzeichnet durch** den folgenden Schritt:
Ausführen einer Anpassung des automatischen Spracherkennungssystems mit erkannten Wörtern, die nicht als verwechselbar markiert sind.

4. Verfahren nach einem der Ansprüche 1 bis 3, **dadurch gekennzeichnet, dass** ein Wort in dem Vokabular des Spracherkennungssystems anhand eines Vergleichs und einer Berechnung der Anzahl unterschiedlicher Phoneme in Bezug auf die Gesamtzahl von Phonemen des Wortes als verwechselbar markiert wird.

5. Verfahren nach einem der Ansprüche 1 bis 4, **dadurch gekennzeichnet, dass** ein Wort in dem Vokabular des Spracherkennungssystems anhand einer Berechnung eines Abstandsmaßes zwischen allen Wörtern in dem Vokabular mit Hilfe einer Menge von Schablonensprachsignalen, die alle Wörter in dem Vokabular repräsentieren, als verwechselbar markiert wird.

6. Verfahren nach Anspruch 5, **dadurch gekennzeichnet, dass** die Menge von Schablonensprachsignalen Hidden-Markov-Modelle sind.

7. Verfahren nach einem der Ansprüche 1 bis 6, **dadurch gekennzeichnet, dass** im Fall einer negativen Bestätigung der Anwender gebeten wird, das falsch erkannte Wort zu wiederholen.

8. Verfahren nach einem der Ansprüche 1 bis 7, **dadurch gekennzeichnet, dass** im Fall einer negativen Bestätigung der Anwender gebeten wird, das falsch erkannte Wort zu buchstabieren.

9. Verfahren nach Anspruch 7 oder 8, **dadurch gekennzeichnet, dass** das vorher falsch erkannte Wort nach seiner korrekten Erkennung anhand der Wiederholung und/oder des Buchstabierens für die Anpassung verwendet wird.

10. Verfahren nach einem der Ansprüche 1 bis 9, **dadurch gekennzeichnet, dass** im Fall einer negativen Bestätigung der Anwender gebeten wird, das falsch erkannte Wort zu tippen.

11. Verfahren nach einem der Ansprüche 1 bis 10, **dadurch gekennzeichnet, dass** die Anpassung des Spracherkennungssystems eine Anpassung der vom Sprecher unabhängigen Hidden-Markov-Modelle an an den Sprecher angepasste Hidden-Markov-Modelle ist.

12. Verfahren nach Anspruch 11, **dadurch gekennzeichnet, dass** das Anpassungsverfahren eine maximale a posteriori-Anpassung oder eine Anpassung durch lineare Regression mit maximaler Wahrscheinlichkeit (*maximum likelihood linear regression adaption*) ist.

## Revendications

1. Procédé permettant de réaliser une adaptation d'un système de reconnaissance automatique de la parole, **caractérisé par** les étapes suivantes :
marquage des mots dans le vocabulaire du système de reconnaissance de la parole qui peuvent être confondus avec d'autres mots avant le processus de reconnaissance ;
demande d'une confirmation pendant le processus de reconnaissance quand un mot marqué comme pouvant être confondu est reconnu ; et
réalisation d'une adaptation du système de reconnaissance automatique de la parole avec des mots reconnus marqués comme pouvant être confondus pour lesquels une confirmation positive a été donnée.

2. Procédé selon la revendication 1, **caractérisé par** l'étape suivante :
vérification des mots reconnus non marqués comme pouvant être confondus ; et
réalisation d'une adaptation du système de reconnaissance automatique de la parole avec des mots vérifiés.

3. Procédé selon la revendication 1 ou 2, **caractérisé par** l'étape suivante :
réalisation d'une adaptation du système de reconnaissance automatique de la parole avec des mots reconnus non marqués comme pouvant être confondus.

4. Procédé selon l'une quelconque des revendications 1 à 3, **caractérisé en ce qu'**un mot dans le vocabulaire du système de reconnaissance de la parole est marqué comme pouvant être confondu sur la base d'une comparaison et d'un calcul du nombre de phonèmes différents par rapport au nombre total de phonèmes du mot.

5. Procédé selon l'une quelconque des revendications 1 à 4, **caractérisé en ce qu'**un mot dans le vocabulaire du système de reconnaissance de la parole est marqué comme pouvant être confondu sur la base d'un calcul d'une mesure de distance entre tous les mots dans le vocabulaire à l'aide d'un ensemble de signaux de parole de référence représentant tous les mots dans le vocabulaire.

6. Procédé selon la revendication 5, **caractérisé en ce que** ledit ensemble de signaux de parole de référence sont des Modèles de Markov Cachés.

7. Procédé selon l'une quelconque des revendications 1 à 6, **caractérisé en ce qu'**en cas de confirmation négative, l'utilisateur est invité à répéter le mot méconnu.

8. Procédé selon l'une quelconque des revendications 1 à 7, **caractérisé en ce qu'**en cas de confirmation négative, l'utilisateur est invité à épeler le mot méconnu.

9. Procédé selon la revendication 7 ou 8, **caractérisé en ce que** le mot précédemment méconnu est utilisé pour une adaptation après sa reconnaissance correcte sur la base de la répétition et/ou de l'épellation.

10. Procédé selon l'une quelconque des revendications 1 à 9, **caractérisé en ce qu'**en cas de confirmation négative, l'utilisateur est invité à taper le mot méconnu.

11. Procédé selon l'une quelconque des revendications 1 à 10, **caractérisé en ce que** l'adaptation du système de reconnaissance de la parole est une adaptation des Modèles de Markov Cachés indépendants du locuteur aux Modèles de Markov Cachés adaptés au locuteur.

12. Procédé selon la revendication 11, **caractérisé en ce que** le procédé d'adaptation est une adaptation maximum a posteriori ou une adaptation de la régression linéaire par maximum de vraisemblance.
